# EUROPEAN PATENT SPECIFICATION

(11) **EP 3 821 177 B1**
(45) Date of publication and mention of the grant of the patent: **31.08.2022**
(21) Application number: 19758806.4
(22) Date of filing: 09.07.2019
(51) Int. Cl.: F24F 11/63, G05D 23/19, F24F 11/46

(54) **INDOOR ENVIRONMENTAL CONTROL SYSTEM AND METHOD CONTROLLING THE SAME**
INNENRAUM-KLIMATISIERUNGSSYSTEM UND VERFAHREN ZU DESSEN STEUERUNG
SYSTÈME DE CLIMATISATION D'INTÉRIEUR ET SON PROCÉDÉ DE COMMANDE

(30) Priority: 10.07.2018 IT 201800007051
(43) Date of publication of application: 19.05.2021
(73) Proprietor: Fantin, Michele, 31057 Silea (TV) (IT)
(72) Inventor: FANTIN, Michele, 31057 Silea (TV) (IT)
(74) Representative: Osgnach, Boris
(86) International application number: PCT/IB2019/055838
(87) International publication number: WO 2020/012355

(56) References cited:
- EP-A1- 3 306 216
- CN-A- 106 288 157
- US-A1- 2015 013 365
- US-B1- 8 190 273
- US-B2- 9 429 923

## Description

### Field of application

The present invention can be applied in the technical sector of environment conditioning and the subject of the invention is a method for controlling the temperature of an indoor environment.

The subject of the invention, furthermore, includes also a system for controlling the temperature of an indoor environment, the operation of this system being based on said method.

### State of the art

The existence of a high number of air conditioning systems is known, said systems being designed to promote temperature regulation of an indoor environment for the purpose of reducing also energy consumption.

More specifically, these types of systems are able to regulate the temperature inside small rooms, generally used in a domestic or civil context, or inside relatively large rooms, for example in an industrial context.

In most of these systems energy consumption is optimized through an accurate selection of the materials used in the components that make up the system and even through an accurate design of the heat flows and of the physical quantities involved in the entire system.

However, the high level of optimization that has been applied to air conditioning systems does not allow the energy savings associated with the conditioning of an environment to be optimized, even though it has considerably reduced the overall energy consumption.

In other words, in order to control the temperature in an indoor environment, for example by keeping it at a constant reference value set by the user, these systems require more energy compared to that theoretically obtained as a resultant of the project data.

From the energy point of view, the difference between the minimum value, corresponding to the project data, and the actual value of the energy absorbed by the system after its installation is determined by the inevitable thermal losses inherent in the environment and in the specific configuration of the system used in that particular application.

These losses are difficult to assess in advance, but their presence can considerably vary the thermal efficiency of the system.

Methods and devices used to improve this aspect are known, which are designed to promote the climatization of the temperature in an indoor environment and are able to at least partially compensate for the inherent losses associated with that specific application.

More specifically, these systems make it possible to maintain a substantially constant comfort index of an indoor environment; it should be clarified that the term "thermal comfort index" designates the overall thermal sensation perceived by the user in the environment.

In addition to the indoor temperature, the comfort index takes in consideration also other factors inherent in the environment, such as humidity, quality of the air, compensation of losses, etc.

The patent document JPH0886489 describes an air conditioning system configured to rapidly provide a sensation of high comfort by means of a method designed to regulate the internal heat exchange temperature according to a substantially neutral comfort index calculated starting from a reference indoor temperature.

More specifically, the comfort index is calculated with a prescribed formula that varies according to some input parameters such as: ventilation angle used, quantity of ventilated air, temperature of the external air, indoor humidity and temperature, heat exchange temperature.

The system comprises a plurality of sensors suited to measure some parameters such as, for example, the internal and external air temperature, and is able to calculate a value of the internal heat exchange temperature in conditions of stability using the temperature value set by the user and associated with the intake and the outdoor environment.

Said system comprises also an electronic control unit suited to regulate the start frequency of the compressor and the fan rotation speed in order to regulate the supply of hot/cold air into the indoor environment and to maintain a constant exchange temperature.

The main drawback posed by said solution is represented by the fact that said system makes it possible to compensate only partially for the thermal losses associated with the environment, intended as a closed and continuous space, and in any case does not optimize energy performance.

Furthermore, heating systems are based on a control intended to provide for air temperature control starting from a reference temperature. Normally, a switch is provided that is suited to regulate the heat flow with which the temperature variation is associated during a predetermined time interval.

A drawback of this solution lies in that these systems are not able to compensate for the thermal losses associated with the environment in real time and this is due to the inertia of the entire system with respect to thermal fluctuations.

Consequently, these systems are not able to optimize thermal efficiency due to the thermal losses and to the consequent energy balance variation.

A further drawback of this system lies in that the heat exchange temperature calculated based on the comfort temperature set by the user is not constant in an indoor environment.

More specifically, different points of an indoor environment have different temperatures due to the differentiated trend of the thermal losses of an indoor environment itself.

For example, a point positioned in proximity to a window will have a different temperature compared to another point in proximity to a bearing wall; the temperature gradient generated in the internal points of the environment can thus modify considerably the feeling of comfort perceived by the user.

The systems described above, furthermore, take in consideration a limited number of quantities associated with the outdoor environment and this represents a further limitation in the approximation of the losses associated with the environment.

The patent document US 8 190 273 describes a system, an apparatus and a method for controlling the speed of the fans designed to cool and/or heat an indoor environment. However, also the solution described in this document poses all the drawbacks described above.

### Presentation of the invention

The present invention intends to overcome the drawbacks mentioned above by providing a particularly efficient and performing method for controlling the temperature of an indoor environment.

More specifically, it is the main object of the present invention to provide a method for controlling the temperature of an indoor environment that makes it possible to maintain a predefined comfort condition for the user while at the same time minimizing the thermal losses and guaranteeing that the energy content of the system remains substantially constant with respect to the variation of the external factors.

It is another object of the present invention to provide a method for controlling the temperature of an indoor environment in a particularly accurate manner, also depending on the climate and weather conditions present in an outdoor environment.

It is another yet not the least object of the invention to provide a method for controlling the temperature of an indoor environment that makes it possible to minimize the dimensions and size of the equipment by adapting them to the actual energy demand of that specific application.

These objects are achieved by a method for controlling the temperature in of an indoor environment according to claim 1.

Other objects that are described in greater detail below are achieved by a method for controlling the temperature of an indoor environment according to the dependent claims.

The invention includes also a system for controlling the temperature of an indoor environment according to claim 12.

### Brief description of the drawings

The advantages and characteristics of the present invention will clearly emerge from the following detailed description of some preferred but non-limiting configurations of a method and a system for controlling the temperature of an indoor environment with particular reference to the following drawing:

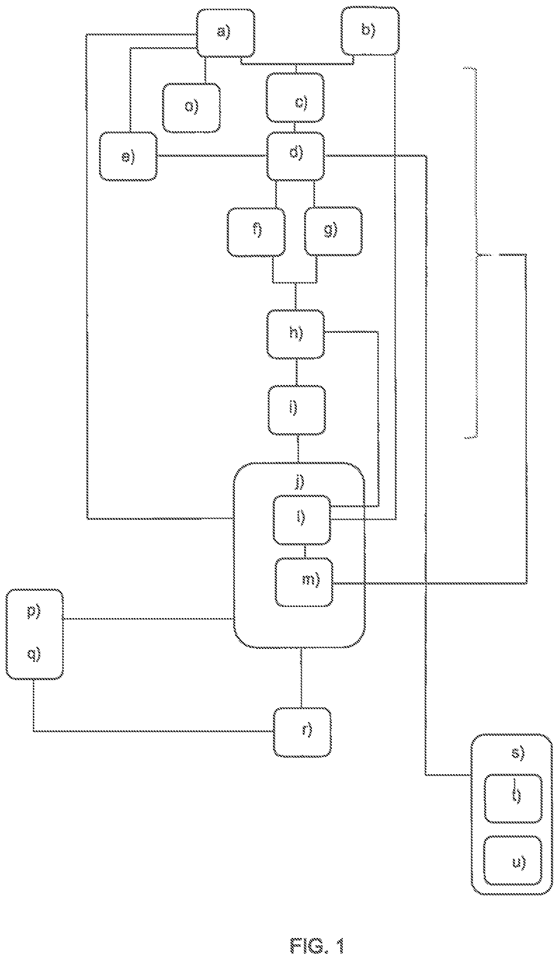

- Figure 1 shows a simplified diagram of the steps of the method that is the subject of the present invention;
- Figure 2 shows a series of diagrams suited to define the trend of some quantities used in the method schematically shown in the block diagram represented in Figure 1.

### Detailed description of the invention

The subject of the present invention is a method for controlling the temperature of an indoor environment.

More specifically, said method, indicated as a whole by the reference numeral 1, can be used to control the temperature T of an indoor environment A in the case where the latter needs to be heated or cooled.

The configuration of the method illustrated in the figures and described below is related to the heating of the environment **A,** however it is understood that the same method can be used in the same way also to promote the cooling or conditioning of the same environment **A.**

The method **1** comprises a first step **a)** of preparation of an air conditioning device designed to promote the heating/cooling of the environment through the forced circulation of a carrier fluid.

For example, the device can be constituted by a boiler suited to promote the circulation of water inside a closed circuit having at least one section in fluidic communication with the environment **A.**

For example, the closed circuit may comprise one or more heat exchangers installed of an indoor environment and suited to promote the heating of the environment.

Conveniently, the method includes a step **b)** of setting of a comfort temperature **T_{c}** and a successive step **c)** of calculation of the surface area subtended by the curve that follows the trend of said comfort temperature **T_{c}** over time.

The comfort temperature **T_{c}** will be set by the user according to his/her needs and to his/her personal perception of hot or cold.

More specifically, this comfort temperature **T_{c}** will be associated with at least one precise point of reference **P** selected in an indoor environment **A.**

After step **b)**, the method includes a step **d)** of monitoring of the trend curve of the temperature **T** measured at the reference point **P** over time.

More specifically, in order to determine the temperature curve **T,** it will be possible to use a temperature probe positioned at the reference point **P**.

There is also a step **e)** of activation/deactivation of the air conditioning device when the curve determined during step **d)** has an instant value that is higher or lower than the comfort value **Tc** set by the user.

More specifically, during step **e)** the activation and deactivation of the device have a respective predetermined duration **tₐ, t_{d}.**

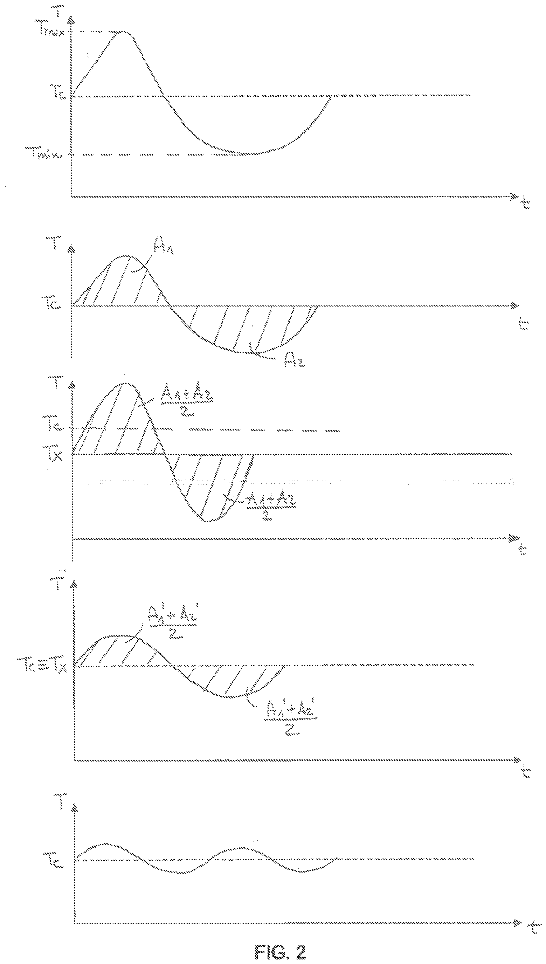

As can be better seen in the first diagram shown in **Figure 2**, the temperature **T** in an indoor environment generally follows a wave trend around the comfort temperature **T_{c}**.

More specifically, when the temperature is below the comfort value **T_{c}** the air conditioning device is activated and exchanges heat in an indoor environment, increasing the temperature in the same indoor environment, through the circulation of the carrier fluid.

When the environment temperature, instead, exceeds the comfort value **T**_{**c**,} the device is deactivated in order to stop the circulation of the carrier fluid inside the circuit.

During the operation of the device, the carrier fluid is heated to a preset operating temperature and therefore a certain amount of heat is transferred by the latter to the environment, even after the device has been stopped.

Furthermore, the activation of the device will promote the heating of the carrier fluid, but the latter will reach the operating temperature only after a certain period of time, during which the environment will keep cooling.

This effect is caused by the fact that the device and the environment have a certain inherent thermal inertia that generates an oscillating trend of the temperature of an indoor environment.

The oscillation of the temperature ranges between two maximum temperature values, respectively an upper value **Tₘₐₓ** and a lower value **Tₘᵢₙ** with respect to the comfort temperature **T_{c}**, which can be the same or different from each other.

Furthermore, as shown in the first diagram of **Figure 2**, generally the temperature curve determined in an indoor environment is not symmetrical and can feature different half waves, meaning that its trend above the comfort temperature **T_{c}** can be different from its trend below said temperature, in particular the elements that can vary are the gradient and the duration of said half waves.

Conveniently, the method includes also a step **f)** of calculation of the surface area **A₁** subtended by a section of the temperature curve determined in step **d)**.

More specifically, the temperature section subjected to the calculation step e) has respective end points whose value corresponds to the comfort temperature **T_{c}** and intermediate values corresponding to a higher temperature value compared to said comfort value **T_{c}.**

In other words, as better illustrated in the second diagram of **Figure 2**, step **f)** includes the calculation of the surface area **A₁** subtended by the upper half wave of the temperature curve, that is, associated with that specific section of the same that develops above the comfort temperature **T_{c}**.

In a similar way, the method includes a step **g)** of calculation of the surface area **A₂** subtended by a section of the temperature curve determined in step **d)** which has respective end points whose value corresponds to the comfort temperature **T_{c}** and intermediate values corresponding to a temperature value that is lower than said comfort value **T_{c}**.

In this case, as better illustrated in the second diagram of **Figure 2**, step **g)** includes the calculation of the surface area **A₂** subtended by the lower half wave of the temperature curve corresponding to the section of the same that develops below the comfort temperature **T_{c}**.

As is better clarified in the continuation of the present description, the surface area subtended by the temperature curve in a predefined time interval indicates the variation of the energy content of the system. The energy content of the system makes it possible to characterize the thermal power associated with the device in that specific operating condition (above or below the comfort temperature).

As better illustrated in the second diagram of **Figure 2**, the surface areas **A_{1,} A₂** measured during steps **f)** and **g)** can be different.

The successive step **h)** of the method includes the calculation of a fictitious temperature value **Tₓ,** visible in the third diagram of **Figure 2****,** which therefore must be understood as a merely numerical value corresponding to the average value of the surface areas **A₁** and **A₂** around which the trend of an ideal temperature curve, also hypothetical and having a substantially sinusoidal shape, is developed.

The fictitious temperature **Tₓ** characterizes the energy content of the system, in other words the energy content of the heat introduced in the environment during a predefined and limited time substantially varies according to the environment itself, since the other variables that characterize the system (temperature of the walls, outdoor temperature, etc.) tend to be constant. As more clearly described below, this condition allows the system to tend towards a balanced situation during the repetition of the corrections of the thermal power introduced in the system.

The ratio between the surface area subtended by the two half waves (**A₁ + A₂**) and the area **A_{c}** subtended by the curve of the comfort temperature **T_{c}** expresses a value that is associated with the difference in thermal energy defined by the fictitious temperature **Tₓ** and by the comfort temperature **T_{c}.**

Conveniently, when the thermal energy **Q** introduced in the environment **A** corresponds to the value of the thermal energy that varies according to the ratio between the surface area subtended by the two half waves (**A₁ + A₂**) and the area **A_{c}** subtended by the curve of the comfort temperature **T**_{**c**,} it will be possible to bring in the environment **A** an energy content that is substantially equal to that defined by the comfort temperature **T_{c}**.

As can be better seen in the third diagram of **Figure 2****,** this ideal curve has a sinusoidal trend around the fictitious value **Tₓ** and an upper half wave whose surface area (**A₁ + A₂) / 2** and amplitude are equal to the surface area (**A₁ + A₂) / 2** and to the amplitude of the lower half wave.

The area globally subtended by the two half waves (**A₁ + A₂) / 2**, expressed as an absolute value, will be substantially equal to the sum (**A₁ + A₂)** of the surface areas calculated in steps **f)** and **g).**

The fictitious condition expressed by the ideal temperature curve refers to a situation of possible heat balance between the amount of heat that must be introduced in the environment and the amount of heat dispersed by the same due to the inevitable losses.

This condition of balance is expressed by the equality of the surface areas subtended by the two half waves, since the surface area of the increasing half wave characterizes the amount of heat introduced in the environment through the carrier fluid, while the surface area of the decreasing half wave is associated with the thermal losses inherent in the environment.

Therefore, the equality of the surfaces areas, if referred to **T_{c}**, characterizes the actual energy content of the system and makes it possible to calculate the exact amount of heat that must be supplied to the environment in order to compensate for the energy that the same environment dissipates due to the thermal losses during a discrete and predetermined time period.

In the condition expressed in step **h),** the ideal sinusoidal temperature curve makes it possible to express the heat balance in the case where the fictitious temperature **T_{c}** must be reached and maintained at the reference point **P** inside the environment.

For this reason, the method comprises a step **i)** of calculation of the ratio between the surface area subtended by a section of the temperature curve determined during step **f)** and the surface area subtended by a section of the temperature curve determined during step **g)** with respect to the surface area subtended by the comfort temperature curve determined during said step **c)**.

Advantageously, there is also a step **j)** of transfer of a predetermined amount of heat into the environment, said amount of heat being suited to promote a variation of the thermal power introduced in the environment as a function of the calculation made during step **h)** and step **i)**.

Conveniently, during the execution of step **j)** there is also a step **l)** of comparison between the fictitious temperature value **Tₓ** calculated during step **h)** and the comfort temperature set in step **b).**

In the case where said comparison does not give a positive result, that is, when the fictitious temperature value is different from the comfort value, during the execution of step **i)** there is a step **m)** during which the preceding steps from **c)** to **i)** are repeated.

Therefore, during step **m)** the surface area subtended by the comfort temperature curve **T_{c}** is calculated again (step **c)**), the temperature trend of the indoor environment is determined (step **d)**), the controlled activation/deactivation of the air conditioning device is promoted (step **e)**) in order to calculate the surface area subtended by the sections of the temperature curve that develop above and below the comfort value **T_{c}** (step **f)** and **g)**) and then the fictitious temperature value **Tₓ** is calculated (step **h)**), successively promoting the comparison of the latter with the comfort value **T_{c}** set by the user (step **i)**).

It is important to underline that during the execution of step **m)** the activation time **tₐ** and the deactivation time **t_{d}** of the air conditioning device can be different from those previously used during the execution of step **e)**.

Consequently, during the execution of step **m)** the surface areas **A₁**', **A₂**' calculated during steps **f)** and **g)** have a value that is different from the previously calculated value, since the trend of the curve has changed with respect to the previous one.

For this reason, the fictitious temperature value **Tₓ**' calculated during step **h)**, carried out following the application of step **m)**, is different from the fictitious value **Tₓ** calculated in a preceding time instant.

Step **m)** will be carried out until the fictitious temperature value **Tₓ**' is substantially equal to the comfort value **T_{c}** set by the user.

During the execution of step **j),** the method includes a step **n)** during which the air conditioning device is selectively activated in order to transfer to the carrier fluid a predetermined quantity of thermal energy suited to promote a temperature variation as a function of the calculation carried out during steps **h)** and **i).**

More specifically, this temperature variation is associated with the reference point **P.**

Preferably, the step **b)** of the method can be configured to set respective comfort temperatures **T_{c} at** a plurality of reference points **P** distributed in the environment **A.**

So, the remaining steps **c) - n)** of the method will be carried out independently for each one of these points **P,** so as to determine respective thermal powers **Q** suited to exactly compensate for the losses associated with the environment at each reference point **P.**

To control the thermal power **Q** introduced in the environment, the method comprises a step **o)** during which the thermal power **Q** introduced in the environment is controlled by measuring the thermal differential **ΔT** associated with the carrier fluid respectively at the outlet and at the inlet of the circuit.

In other words, this thermal differential **ΔT** is calculated at the supply opening and at the return opening of the carrier fluid that circulates inside the circuit.

It is thus possible to calculate the thermal power **Q**, referred to a predetermined time interval, introduced in the environment by multiplying said temperature differential **ΔT** by the flow rate **P** of the fluid flowing inside the circuit.

Advantageously, the method can include two distinct steps, indicated by the letters p) and q), during which a plurality of parameters not associated with the environment are measured.

More specifically, following the execution of step m) (comparison between the fictitious temperature value and the comfort temperature value) it is possible to instantly measure a plurality of parameters associated with an area of the outdoor environment.

The parameters associated with the external environment, generally an outdoor environment, can be selected from the group including solar irradiation, wind intensity, outdoor temperature, humidity, atmospheric pressure etc.

During the execution of step **q)** some vital parameters associated with one or more users present in an indoor environment are measured.

For example, the parameters measured during said step can be selected from the group including body temperature, heart rate, blood pressure, etc.

The method includes also a step **r)** of storage of the thermal power value **Q** (referred to a predetermined time interval) calculated during step **j)** and of the instant values of the external and vital parameters respectively measured during steps **p)** and **q)**.

The step **r)** is carried out at the same time as step **j)** of transfer of the predetermined amount of heat into the environment **A.**

Furthermore, step **r)** can be carried out when it is noticed that the external parameters affect the value of the thermal energy **Q** (referred to a predetermined time interval) necessary to maintain the temperature **T** inside the environment **A** at a value substantially equal to the comfort value **T_{c}.**

In this way it will be possible to associate the value of the thermal power **Q** calculated as described above with the value of the instant parameters, both external and vital.

In other words, the method will make it possible to determine the amount of heat **Q** that the device must provide at the reference point **P** in order to obtain the comfort temperature **T_{c}** in the conditions in which the parameters associated with the outdoor environment and with the user correspond to those previously stored.

Conveniently, with the same comfort temperature **T_{c}**, the thermal power **Q** calculated during step **j)** can assume different values as the external or vital parameters measured during steps **p)** and **q)** vary.

More specifically, the variation of the external parameters may cause a modification of the losses associated with the environment **A,** while the variation of the vital parameters of the user may cause the latter to perceive a different sensation in terms of hot/cold, this being a condition that can be modified by adjusting the heat introduced in the environment.

The step r) makes it possible to associate the amount of heat needed by the environment to maintain the comfort temperature with a plurality of external or vital conditions, so that it is always possible to know in advance the overall thermal energy Q that must be generated by the air conditioning device when said conditions occur.

Advantageously, the method must also comprise one or more steps following the determination of the thermal power necessary to guarantee the thermal balance and suited to promote a reduction in the amplitude of the sinusoidal curve through the reduction of the instants of activation of the air conditioning device.

During the execution of these steps, however, the thermal power introduced in the environment **A** remains substantially constant.

In this way, it will be possible to promote the adjustment of the temperature **T** present in the environment **A** through a sort of "linearization" of the temperature curve, meaning through an attempt to "force" the trend of said curve to follow the more linear trend assumed by the comfort temperature **T_{c}** which must be understood as an ideal temperature set according to the relative humidity and to possible further parameters.

Preferably, as shown in the fourth diagram of **Figure 2**, the method comprises also a step **s)** of adjustment of the temperature curve **T** determined of an indoor environment **A** during the execution of step **d)** in order to make it substantially similar to the trend curve of the comfort temperature **T_{c}**.

More specifically, during the execution of step **s)** there is a step **t)** of modification of the temperature curve **T** in order to adapt it to the trend of the ideal sinusoidal curve of the temperature that is obtained when the fictitious temperature value calculated during said step **i)** coincides with the substantially idealized comfort value set by the user.

In order to modify the trend of the temperature measured of an indoor environment forcing it to follow a sinusoidal trend nearer to the comfort temperature, the execution of step **e)** of controlled activation/deactivation of the air conditioning device is repeated during step **s)**.

This forcing action can be applied to the trend of the temperature measured at a single reference point **P** or, alternatively, it may affect the temperature measured at several reference points **P**.

During the execution of step **s)** and following step **t)** there can be a step **u)** of reduction of the amplitude of the sinusoidal curve associated with the temperature T measured in an indoor environment **A**.

The conditioning step **u)** is carried out before steps **p)** and **q)** of measurement of the parameters and can be carried out through a further execution of step e) of controlled activation/deactivation of the air conditioning device.

More specifically, as better visible in the fourth diagram of **Figure 2**, the sinusoidal curve associated with the temperature curve may present reduced period and amplitude, so that it oscillates within a neighbourhood very near the comfort temperature.

It is worth underlining that also in this case the thermal power **Q** introduced in the environment always corresponds to that calculated in the corresponding step **I)** of the method, even if it is its distribution over time that varies owing to the variation in the amplitude and period of the sinusoidal curve.

The execution of steps **t)** and **u)** makes it possible to promote an increase in the maximum temperature perceived by one or more persons present inside the environment A and makes the temperature perceived by the latter more uniform in general, improving his/her feeling of well-being when he/she is of an indoor environment.

By applying the steps of the present method, therefore, it will be possible to assess "a priori" the amount of heat that is necessary to promote the heating or cooling of an environment.

The value of said thermal power makes it possible to compensate exactly for the thermal losses associated with said environment.

Differently from the known temperature regulation systems, which are configured to "pursue" the ideal temperature measured by a thermostat through the activation of the air conditioning device, the present method makes it possible to assess since the beginning the amount of heat that is necessary to heat or cool the environment in certain conditions.

Whenever these conditions occur, the air conditioning device will be activated in order to produce/remove the previously calculated amount of heat and introduce or remove it into/from the environment.

According to a further aspect of the present invention, the subject of the same includes a system for controlling the temperature of an indoor environment **A**.

More specifically, this system comprises at least one air conditioning device suited to promote the heating/cooling of the environment **A** through the forced circulation of a carrier fluid inside a circuit associated with the environment **A**.

In addition to the above, sensor means are also provided, which are suited to monitor the trend curve of the temperature **T** measured in at least one reference point **P** located in an indoor environment **A** and activation means associated with said at least one air conditioning device in order to promote its selective activation when the trend curve of the temperature measured by the sensor means has an instant value that is higher/lower than a predetermined value.

Conveniently, the activation means are configured to selectively activate said air conditioning device according to the steps of the method previously described, so as to promote the transfer of a predetermined amount of thermal energy **Q** to the carrier fluid. The entity of this thermal energy **Q** is such as to promote, at the reference point **P**, a variation in the instant temperature as a function of the calculation made during step **h)** and step **i)** of the method described above.

The reference numerals and signs added in the claims and in the description are intended to make the text clearer to understand and must not be considered as elements intended to limit the technical scope of application of the objects or the processes they are meant to identify.

## Claims

1. A method for controlling the temperature of an indoor environment, comprising the following steps:
a) providing an air conditioning device suited to promote the cooling/heating of the environment through the forced circulation of a carrier fluid inside a circuit associated with the environment;
b) setting a comfort temperature associated with at least one reference point selected in an indoor environment;
c) calculating the surface area subtended by the curve corresponding to the trend of said comfort temperature over time;
d) monitoring the trend curve of the temperature measured at said at least one reference point over time;
e) activating/deactivating the air conditioning device when the instant value of the temperature curve determined during said step d) is lower/higher than the comfort value set in said step b), said step e) being carried out with a predetermined duration of the activation and deactivation times;
f) calculating the surface area subtended by a section of the temperature curve determined during step d), said curve section having respective end points whose value corresponds to the comfort temperature, and having intermediate points corresponding to higher temperature values compared to the comfort temperature;
g) calculating the surface area subtended by a section of the temperature curve determined during step d), said curve section having respective end points whose value corresponds to the comfort temperature, and having intermediate points corresponding to lower temperature values compared to the comfort temperature;
h) calculating a fictitious temperature value which corresponds to the average value of an ideal sinusoidal temperature curve, said ideal sinusoidal temperature curve having an amplitude that is suited to distribute in the two half-waves the sum of the surface areas calculated in said step f) and in said step g);
i) calculating the ratio between, respectively, the sum of the surface area subtended by a section of the temperature curve determined in step f) with the surface area subtended by a section of the temperature curve determined in step g) and the surface area subtended by the comfort temperature curve determined in step c);
j) transferring a predetermined amount of heat into the environment, said predetermined amount of heat being suited to promote a variation of the thermal power introduced in the environment as a function of the calculation carried out in step h) and in step i);
wherein
said step j) comprises a step n) of selective activation of the air conditioning device in order to transfer a predetermined amount of thermal energy to said carrier fluid, said amount of thermal energy being suited to promote a variation of the instant temperature as a function of the calculation carried out in step h) and in step i), said temperature variation being associated with said at least one reference point.

2. Method as claimed in claim 1, **characterized in that** said transfer step j) comprises a step I) of comparison between said fictitious value calculated in said step h) and the comfort temperature set in said step b).

3. Method as claimed in claim 2, **characterized in that** said transfer step j) comprises a step m) during which the steps from c) to i) are repeated if said fictitious value is different from the comfort temperature, step e) being carried out with different activation/deactivation times.

4. Method as claimed in claim 2, **characterized in that** it comprises a step o) of control of the thermal power introduced in the environment, said step o) being carried out by measuring the difference between the temperature of the carrier fluid at the inlet and the temperature of the carrier fluid at the outlet of said circuit.

5. Method as claimed in one or more of the preceding claims, **characterized in that** it comprises a step p) of instant measurement of a plurality of parameters associated with the space in an outdoor environment.

6. Method as claimed in claim 5, **characterized in that** in said step p) some atmospheric parameters are measured which are selected from the group comprising solar irradiation, wind intensity, outdoor temperature, humidity, atmospheric pressure and other similar parameters.

7. Method as claimed in claim 5 or 6, **characterized in that** it comprises a step q) of measurement of a plurality of vital parameters associated with one or more users who are present in the indoor environment.

8. Method as claimed in one or more of the preceding claims, **characterized in that** it comprises a step r) of storage of the value of the thermal power calculated in step j) and, respectively, of the instant value of the parameters measured in said step p) and associated with the outdoor environment and/or of the value of the vital parameters measured in said step q).

9. Method as claimed in one or more of the preceding claims, **characterized in that** it comprises a step s) of adaptation of the temperature curve determined in said step d), said adaptation step s) being carried out in cooperation with said step e) of selective activation/deactivation of the air conditioning device in order to make the temperature curve substantially similar to the comfort temperature curve.

10. Method as claimed in claim 9, **characterized in that** said step s) comprises a step t) of modification of the curve of the temperature of an indoor environment, which is carried out in cooperation with said step e) of selective activation/deactivation of the air conditioning device in order to modify the temperature curve and make it substantially equal to the sinusoidal shape of said ideal temperature curve which is obtained when said average fictitious value calculated in said step h) is the same as the value of the comfort temperature set in said step b).

11. Method as claimed in claim 10, **characterized in that** said adaptation step s) comprises, after said modification step t), a step u) during which the amplitude of the sinusoidal curve associated with the temperature of the indoor environment is reduced, said amplitude reduction step u) being carried out in cooperation with said step e) of selective activation/deactivation of the air conditioning device.

12. A system for controlling the temperature of an indoor environment, said system comprising:
- at least one air conditioning device suited to promote the heating/cooling of the environment through the forced circulation of a carrier fluid inside a circuit associated with the environment;
- sensor means suited to monitor the trend curve of the temperature measured in at least one reference point;
- activation means associated with said at least one air conditioning device in order to promote the selective activation thereof when the trend curve of the temperature measured by said sensor means has an instant value that is higher /lower than a predetermined value;
**characterized in that** said activation means are configured to selectively activate said at least one air conditioning device following the steps of the method according to one or more of the preceding claims.

## Patentansprüche

1. Verfahren zur Kontrolle der Temperatur eines Innenbereichs, folgende Schritte umfassend:
a) Bereitstellung eines Klimageräts, das dazu geeignet ist, durch die Zwangszirkulation eines Trägerfluids in einem mit der Umgebung assoziierten Kreislauf die Heizung/Kühlung der Umgebung zu bewirken;
b) Einstellung einer mit wenigstens einem in einem Innenbereich gewählten Bezugspunkt assoziierten Komforttemperatur;
c) Berechnung des Oberflächenbereichs, der durch die dem Trend der besagten Komforttemperatur im zeitlichen Verlauf entsprechende Kurve unterspannt ist;
d) Überwachung der Trendkurve der im zeitlichen Verlauf an dem besagten wenigstens einen Bezugspunkt gemessenen Temperatur;
e) Aktivierung/Deaktivierung des Klimageräts, wenn der momentane Wert der während des besagten Schritts d) bestimmten Temperaturkurve höher/niedriger ist als der in Schritt b) eingestellte Komfortwert, wobei der besagte Schritt e) mit einer vorbestimmten Dauer der Aktivierungs-/Deaktivierungszeiten ausgeführt wird;
f) Berechnung der durch einen Abschnitt der in Schritt d) bestimmten Temperaturkurve unterspannten Oberfläche, wobei der besagte Kurvenabschnitt jeweils Endpunkte aufweist, deren Wert der Komforttemperatur entspricht, und Zwischenpunkte aufweist, die im Vergleich zur Komforttemperatur höheren Temperaturwerten entsprechen;
g) Berechnung der durch einen Abschnitt der in Schritt d) bestimmten Temperaturkurve unterspannten Oberfläche, wobei der besagte Kurvenabschnitt jeweils Endpunkte aufweist, deren Wert der Komforttemperatur entspricht, und Zwischenpunkte aufweist, die im Vergleich zur Komforttemperatur niedrigeren Temperaturwerten entsprechen;
h) Berechnung eines fiktiven Temperaturwerts, welcher dem Durchschnittswert einer idealen sinusförmigen Temperaturkurve entspricht, wobei die besagte ideale sinusförmige Temperaturkurve eine Amplitude aufweist, die dazu geeignet ist, die Summe der in besagtem Schritt f) und in besagtem Schritt g) berechneten Oberflächen auf den zwei Halbwellen zu verteilen;
i) Berechnung des Verhältnisses zwischen der Summe aus der durch einen Abschnitt der in Schritt f) bestimmten Temperaturkurve überspannten Oberfläche und der durch einen Abschnitt der in Schritt g) bestimmten Temperaturkurve überspannten Oberfläche einerseits und der durch die in Schritt g) bestimmten Komforttemperaturkurve unterspannten Oberfläche andererseits;
j) Übertragung einer vorbestimmten Wärmemenge in die Umgebung, wobei die besagte vorbestimmte Wärmemenge dazu geeignet ist, eine Veränderung der Wärmeleistung zu bewirken, die in Abhängigkeit der in Schritt h) und in Schritt i) ausgeführten Berechnung der Umgebung zugeführt wurde;
wobei der besagte Schritt j) einen Schritt n) der selektiven Aktivierung des Klimageräts umfasst, um eine vorbestimmte Menge Wärmeenergie an das besagte Trägerfluid zu übertragen, wobei die besagte Menge Wärmeenergie dazu geeignet ist, in Abhängigkeit der in Schritt h) und in Schritt i) ausgeführten Berechnung eine Veränderung der momentanen Temperatur zu bewirken, wobei die besagte Temperaturveränderung mit dem besagten wenigstens einen Bezugspunkt assoziiert ist.

2. Verfahren nach Patentanspruch 1, **dadurch gekennzeichnet, dass** der besagte Schritt der Übertragung j) einen Schritt I) des Vergleichs zwischen dem besagten fiktiven, in besagtem Schritt h) berechneten Wert und der in besagtem Schritt b) eingestellten Komforttemperatur umfasst.

3. Verfahren nach Patentanspruch 2, **dadurch gekennzeichnet, dass** der besagte Schritt der Übertragung j) einen Schritt m) umfasst, in dem die Schritte von c) bis i) wiederholt werden, wenn der besagte fiktive Wert von der Komforttemperatur abweicht, wobei der Schritt e) mit anderen Aktivierungs-/Deaktivierungszeiten ausgeführt wird.

4. Verfahren nach Patentanspruch 2, **dadurch gekennzeichnet, dass** es einen Schritt o) der Kontrolle der der Umgebung zugeführten Wärmeleistung umfasst, wobei der besagte Schritt o) durch Messung der Differenz zwischen der Temperatur des Trägerfluids am Einlass und der Temperatur des Trägerfluids am Auslass des besagten Kreislaufs erfolgt.

5. Verfahren nach einem oder mehreren der vorstehenden Patentansprüche, **dadurch gekennzeichnet, dass** es einen Schritt p) der momentanen Messung einer Vielzahl von in einem Außenbereich mit dem Raum assoziierten Parametern umfasst.

6. Verfahren nach Patentanspruch 5, **dadurch gekennzeichnet, dass** in besagtem Schritt p) einige die Witterung betreffenden Parameter gemessen werden, die aus der Gruppe ausgewählt werden, die Sonneneinstrahlung, Windstärke, Außentemperatur, Feuchtigkeit, Luftdruck und weitere, ähnliche Parameter umfasst.

7. Verfahren nach Patentanspruch 5 oder 6, **dadurch gekennzeichnet, dass** es einen Schritt q) der Messung einer Vielzahl von mit einem oder mehreren, im Innenbereich anwesenden Benutzern assoziierten vitalen Parametern umfasst.

8. Verfahren nach einem oder mehreren der vorstehenden Patentansprüche, **dadurch gekennzeichnet, dass** es einen Schritt r) der Speicherung des in Schritt j) berechneten Wärmeleistungswerts und jeweils des momentanen Werts der in besagtem Schritt p) gemessenen und mit dem Außenbereich assoziierten Parameter und/oder des Werts der in besagtem Schritt q) gemessenen vitalen Parameter umfasst.

9. Verfahren nach einem oder mehreren der vorstehenden Patentansprüche, **dadurch gekennzeichnet, dass** es einen Schritt s) der Anpassung der in besagtem Schritt d) bestimmten Temperaturkurve umfasst, wobei der besagte Schritt der Anpassung s) unter Zusammenwirken mit dem besagten Schritt e) der selektiven Aktivierung/Deaktivierung des Klimageräts ausgeführt wird, um die Temperaturkurve im Wesentlichen der Komforttemperaturkurve ähnlich zu machen.

10. Verfahren nach Patentanspruch 9, **dadurch gekennzeichnet, dass** der besagte Schritt s) einen Schritt t) der Veränderung der Temperaturkurve eines Innenbereichs umfasst, welcher unter Zusammenwirken mit dem besagten Schritt e) der selektiven Aktivierung/Deaktivierung des Klimageräts ausgeführt wird, um die Temperaturkurve zu ändern und im Wesentlichen der Sinusform der besagten idealen Temperaturkurve ähnlich zu machen, welche erzielt wird, wenn der besagte, in besagtem Schritt h) berechnete fiktive Durchschnittswert mit dem Wert der in besagtem Schritt b) eingestellten Komforttemperatur übereinstimmt.

11. Verfahren nach Patentanspruch 10, **dadurch gekennzeichnet, dass** der besagte Schritt s) der Anpassung nach dem besagten Schritt t) der Veränderung einen Schritt u) umfasst, in dem die Amplitude der mit der Temperatur des Innenbereichs assoziierten, sinusförmigen Kurve reduziert wird, wobei der besagte Schritt u) der Amplitudenreduzierung unter Zusammenwirken mit dem besagten Schritt e) der selektiven Aktivierung/Deaktivierung des Klimageräts ausgeführt wird.

12. System zur Kontrolle der Temperatur eines Innenbereichs, wobei das besagte System Folgendes umfasst:
- wenigstens ein Klimagerät, dazu geeignet, durch die Zwangszirkulation eines Trägerfluids in einem mit der Umgebung assoziierten Kreislauf die Heizung/Kühlung der Umgebung zu bewirken;
- Sensormittel, dazu geeignet, die Trendkurve der an wenigstens einem Bezugspunkt gemessenen Temperatur zu überwachen;
- Mit dem besagten, wenigstens einen Klimagerät assoziierte Aktivierungsmittel zur selektiven Aktivierung desselben, wenn die Trendkurve der durch die besagten Sensormittel gemessenen Temperatur einen momentanen Wert aufweist, der höher/niedriger ist als ein vorbestimmter Wert;
**dadurch gekennzeichnet, dass** die besagten Aktivierungsmittel dazu konfiguriert sind, selektiv das besagte wenigstens eine Klimagerät den Schritten des Verfahrens nach einem oder mehreren der vorstehenden Patentansprüche folgend zu aktivieren.

## Revendications

1. Méthode pour le contrôle de la température d'un environnement intérieur, comprenant les étapes suivantes:
a) fournir un dispositif de climatisation indiqué pour favoriser le refroidissement/chauffage de l'environnement par la circulation forcée d'un fluide porteur à l'intérieur d'un circuit associé à l'environnement;
b) régler une température de confort associée à au moins un point de référence sélectionné dans un environnement intérieur;
c) calculer la surface sous-tendue par la courbe correspondant à l'évolution de ladite température de confort dans le temps;
d) surveiller la courbe de tendance de la température mesurée audit au moins un point de référence dans le temps;
e) activer/désactiver le dispositif de climatisation lorsque la valeur instantanée de la courbe de température déterminée au cours de ladite étape d) est inférieure/supérieure à la valeur de confort définie dans ladite étape b), ladite étape e) étant effectuée avec une durée prédéterminée des temps d'activation et de désactivation;
f) calculer la surface sous-tendue par une section de la courbe de température déterminée au cours de l'étape d), ladite section de courbe ayant des points d'extrémité respectifs dont la valeur correspond à la température de confort, et ayant des points intermédiaires correspondant à des valeurs de température plus élevées par rapport à la température de confort;
g) calculer la surface sous-tendue par une section de la courbe de température déterminée au cours de l'étape d), ladite section de courbe ayant des points d'extrémité respectifs dont la valeur correspond à la température de confort, et ayant des points intermédiaires correspondant à des valeurs de température inférieures par rapport à la température de confort;
h) calculer une valeur de température fictive qui correspond à la valeur moyenne d'une courbe de température sinusoïdale idéale, ladite courbe de température sinusoïdale idéale ayant une amplitude qui est indiquée pour distribuer dans les deux demi-ondes la somme des surfaces calculées dans ladite étape f) et dans ladite étape g) ;
i) calculer le rapport entre, respectivement, la somme de la surface sous-tendue par une section de la courbe de température déterminée à l'étape f) avec la surface sous-tendue par une section de la courbe de température déterminée à l'étape g) et la surface sous-tendue par la courbe de température de confort déterminée à l'étape c);
j) transférer une quantité prédéterminée de chaleur dans l'environnement, ladite quantité prédéterminée de chaleur étant adaptée pour favoriser une variation de la puissance thermique introduite dans l'environnement en fonction du calcul effectué à l'étape h) et à l'étape i);
où ladite étape j) comprend une étape n) d'activation sélective du dispositif de climatisation afin de transférer une quantité prédéterminée d'énergie thermique audit fluide porteur, ladite quantité d'énergie thermique étant adaptée pour favoriser une variation de la température instantanée en fonction du calcul effectué à l'étape h) et à l'étape i), ladite variation de température étant associée audit au moins un point de référence.

2. Méthode selon la revendication 1, **caractérisée en ce que** ladite étape de transfert j) comprend une étape I) de comparaison entre ladite valeur fictive calculée dans ladite étape h) et la température de confort fixée dans ladite étape b).

3. Méthode selon la revendication 2, **caractérisée en ce que** ladite étape de transfert j) comprend une étape m) au cours de laquelle les étapes de c) à i) sont répétées si ladite valeur fictive est différente de la température de confort, l'étape e) étant réalisée avec des temps d'activation/désactivation différents.

4. Méthode selon la revendication 2, **caractérisée en ce qu'**elle comprend une étape o) de contrôle de la puissance thermique introduite dans le milieu, ladite étape o) étant réalisée en mesurant la différence entre la température du fluide porteur à l'entrée et la température du fluide porteur à la sortie dudit circuit.

5. Méthode selon l'une ou plusieurs des revendications précédentes, **caractérisée en ce qu'**elle comprend une étape p) de mesure instantanée d'une pluralité de paramètres associés à l'espace dans un environnement extérieur.

6. Méthode selon la revendication 5, **caractérisée en ce que** dans ladite étape p), on mesure certains paramètres atmosphériques qui sont sélectionnés dans le groupe comprenant le rayonnement solaire, l'intensité du vent, la température extérieure, l'humidité, la pression atmosphérique et d'autres paramètres similaires.

7. Méthode selon la revendication 5 ou 6, **caractérisée en ce qu'**elle comprend une étape q) de mesure d'une pluralité de paramètres vitaux associés à un ou plusieurs utilisateurs qui sont présents dans l'environnement intérieur.

8. Méthode selon l'une ou plusieurs des revendications précédentes, **caractérisée en ce qu'**elle comprend une étape r) de stockage de la valeur de la puissance thermique calculée à l'étape j) et, respectivement, de la valeur instantanée des paramètres mesurés dans ladite étape p) et associés à l'environnement extérieur et/ou de la valeur des paramètres vitaux mesurés à ladite étape q).

9. Méthode selon l'une ou plusieurs des revendications précédentes, **caractérisée en ce qu'**elle comprend une étape s) d'adaptation de la courbe de température déterminée à ladite étape d), ladite étape s) d'adaptation étant réalisée en coopération avec ladite étape e) d'activation/désactivation sélective du dispositif de climatisation afin de rendre la courbe de température essentiellement similaire à la courbe de température de confort.

10. Méthode selon la revendication 9, **caractérisée en ce que** ladite étape s) comprend une étape t) de modification de la courbe de la température d'un environnement intérieur, qui est effectuée en coopération avec ladite étape e) d'activation/désactivation sélective du dispositif de climatisation afin de modifier la courbe de température et de la rendre essentiellement égale à la forme sinusoïdale de ladite courbe de température idéale qui est obtenue lorsque ladite valeur fictive moyenne calculée dans ladite étape h) est égale à la valeur de la température de confort fixée dans ladite étape b).

11. Méthode selon la revendication 10, **caractérisée en ce que** ladite étape d'adaptation s) comprend, après ladite étape de modification t), une étape u) au cours de laquelle l'amplitude de la courbe sinusoïdale associée à la température de l'environnement intérieur est réduite, ladite étape de réduction d'amplitude u) étant réalisée en coopération avec ladite étape e) d'activation/désactivation sélective du dispositif de climatisation.

12. Système pour contrôler la température d'un environnement intérieur, ledit système comprenant :
- au moins un dispositif de climatisation indiqué pour favoriser le chauffage/refroidissement de l'environnement par la circulation forcée d'un fluide porteur à l'intérieur d'un circuit associé à l'environnement;
- des moyens de détection indiqués pour surveiller la courbe de tendance de la température mesurée en au moins un point de référence;
- des moyens d'activation associés audit au moins un dispositif de climatisation afin de favoriser l'activation sélective de celui-ci lorsque la courbe de tendance de la température mesurée par lesdits moyens de détection présente une valeur instantanée qui est supérieure/inférieure à une valeur prédéterminée;
**caractérisée en ce que** lesdits moyens d'activation sont configurés pour activer sélectivement ledit au moins un dispositif de climatisation en suivant les étapes de la méthode selon l'une ou plusieurs des revendications précédentes.
